# FASCICULE DE BREVET EUROPEEN

(11) **EP 3 347 624 B1**
(45) Date de publication et mention de la délivrance du brevet: **19.02.2020**
(21) Numéro de dépôt: 16774517.3
(22) Date de dépôt: 30.08.2016
(51) Int. Cl.: F16H 55/40

(54) **POULIE DE TYPE AMORTISSEUR DE VIBRATION DE TORSION MUNIE DE RENFORTS DECALÉS ANGULAIREMENT**
RIEMENSCHEIBE MIT TORSIONSSCHWINGUNGSDÄMPFER MIT WINKELVERSETZTEN VERSTÄRKUNGSELEMENTEN
TORSIONAL VIBRATION DAMPER-TYPE PULLEY PROVIDED WITH ANGULARLY OFFSET REINFORCEMENT MEMBERS

(30) Priorité: 07.09.2015 FR 1558248
(43) Date de publication de la demande: 18.07.2018
(73) Titulaire: PSA AUTOMOBILES S.A., 78300 Poissy (FR)
(72) Inventeur: BALENGHIEN, Olivier, 93340 Le Raincy (FR); AUBOIS, Valerie, 93700 Drancy (FR)
(86) Numéro de dépôt international: PCT/FR2016/052141
(87) Numéro de publication internationale: WO 2017/042450

(56) Documents cités:
- EP-A1- 0 553 648
- JP-A- H04 102 755
- US-A- 5 630 769
- US-A1- 2011 300 979

## Description

La présente invention porte sur une poulie de type amortisseur de vibration de torsion munie de renforts décalés angulairement, ainsi que sur le moteur thermique et le véhicule correspondant. Une telle poulie est révélée dans US5630769A.

De façon connue en soi, les poulies de type amortisseur de vibrations de torsion (AVT) amortissent les vibrations de torsion du vilebrequin, ménageant de ce fait les courroies de transmission et les composants entraînés par le vilebrequin. En outre, les poulies AVT permettent d'atténuer les vibrations de la courroie, ainsi que les contraintes sur le galet tendeur et les autres accessoires.

Généralement, en vue d'améliorer la prestation acoustique des poulies AVT, les constructeurs automobiles laissent leurs fournisseurs dimensionner ces poulies, tout en leur imposant une spécification acoustique et vibratoire. Les spécifications acoustiques contraignent fortement les fournisseurs pour le choix des composants des poulies AVT, limitant ainsi les performances générales de ces poulies, et imposent des surcoûts.

Par ailleurs, la poulie AVT présente toutefois l'inconvénient de générer un bruit aéraulique, qualifié de bruit de sirène. A titre d'exemple, une poulie AVT à répartition uniforme de renforts émet périodiquement des harmoniques, du fait que les renforts de cette poulie AVT sont répartis régulièrement suivant sa circonférence. Il en résulte un bruit émergeant du bruit moteur du véhicule pouvant être ressenti comme agaçant par le conducteur et les passagers du véhicule.

L'invention vise à remédier efficacement à cet inconvénient en proposant une poulie de type amortisseur de vibrations de torsion comprenant les caractéristiques de la revendication 1.

Ainsi, du fait du décalage angulaire introduit par rapport à la position théorique des renforts, l'harmonique liée au nombre de renforts est fortement réduite, et aucun autre pic de volume sonore n'est créé à une autre fréquence particulière. On étale par conséquent le volume sonore lié à la rotation de la poulie, ce qui évite l'émergence d'un bruit caractéristique par rapport au bruit global du moteur. Il est alors possible de ne pas contraindre excessivement la conception de la poulie pour des raisons acoustiques, et de dimensionner celle-ci pour assurer une performance de transmission élevée pour un fonctionnement optimal des accessoires.

Selon une réalisation, ledit premier décalage angulaire étant réalisé suivant un premier sens de rotation et ledit deuxième décalage angulaire étant réalisé suivant un deuxième sens de rotation opposé au premier sens de rotation.

Grâce à la disposition ainsi proposée, la succession des renforts présente un caractère aléatoire, par un phénomène similaire à un brouillage de la séquence régulière.

Selon une réalisation, la séquence binaire pseudo-aléatoire comprend le même nombre de bits qu'un nombre total de renforts.

Selon une réalisation, des valeurs du premier et du deuxième décalages angulaires sont déterminées en fonction d'un balourd de poulie induit par lesdits renforts.

Selon une réalisation, un écart entre des valeurs du premier et du deuxième décalages angulaires est égal à au moins six degrés.

Selon une réalisation, la poulie comporte entre neuf et seize renforts, et la séquence binaire pseudo-aléatoire utilisée possède une séquence périodique à partir d'un seizième bit.

Selon une réalisation, les renforts sont au nombre de douze et la séquence binaire pseudo-aléatoire correspond à : 1 ;0;0;0;1;0;0;1;1 ;0;1 ;0.

L'invention a également pour objet un moteur thermique de véhicule automobile comprenant une poulie de type amortisseur de vibrations de torsion telle que précédemment définie.

L'invention a également pour objet un véhicule automobile comprenant un moteur thermique tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'une poulie AVT selon la présente invention;
La figure 2 est une représentation schématique de face d'une poulie AVT représentant une position théorique des renforts;
La figure 3 est une représentation schématique de face d'une poulie AVT selon la présente invention représentant les décalages angulaires des renforts.

Les éléments identiques, similaires, ou analogues conservent les mêmes références d'une figure à l'autre.

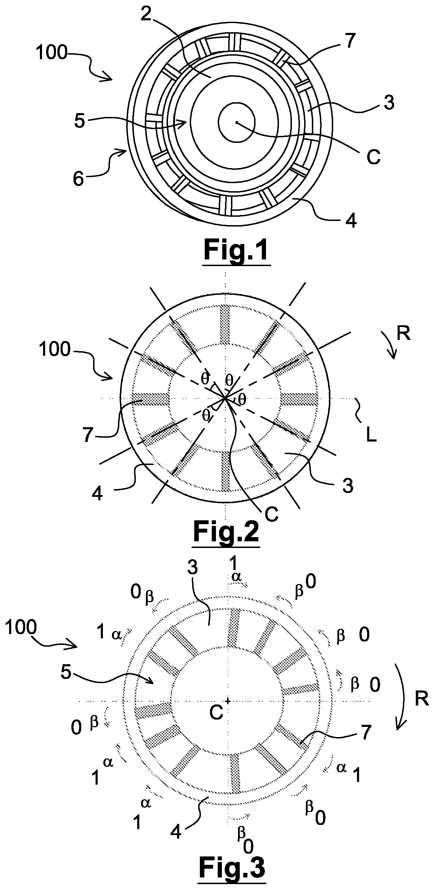

La figure 1 montre une poulie 100 de type amortisseur de vibrations de torsion (AVT) permettant d'assurer une transmission de mouvement dans une chaîne cinématique entre un arbre menant et une courroie mené tout en amortissant les vibrations de torsion entre l'arbre et la courroie. Par exemple, l'arbre menant tournant peut être un vilebrequin de moteur. La poulie 100 présente un corps 5, de forme sensiblement annulaire, qui comprend un moyeu 2 amortissant destiné à être monté sur l'arbre, et une jante 3 présentant des flasques 4 au milieu desquels une surface de révolution 6 est prévue pour être en contact avec une courroie d'entraînement. Cette surface de révolution 6 comporte plusieurs vés pour recevoir des stries prévues sur la courroie d'entraînement. La jante 3 de la poulie 100 comporte en outre des renforts 7 pouvant présenter toute forme adaptée au renforcement de la poulie 100.

Le modèle représenté en figure 2 présente une position théorique de renforts 7 ayant chacun un axe longitudinal L s'étendant radialement par rapport à l'axe C du corps 5 de la poulie 100. Plus précisément, les renforts 7 sont répartis régulièrement autour de l'axe C de telle façon, que deux renforts 7 consécutifs sont séparés entre eux d'un angle θ sensiblement égal à 360 divisé par le nombre N total de renfort 7. Dans l'exemple représenté mettant en œuvre douze renforts 7, il y a sensiblement un angle θ constant de 360/12 = 30 degrés entre chaque renfort 7. Une telle répartition angulaire régulière des renforts 7 par rapport à l'axe C de la poulie 100 induit alors un bruit de sirène prédominant.

La présente invention consiste alors à modifier la répartition de ces renforts 7 de manière à modifier la sonorité du bruit de sirène en une sonorité plus proche de celle des moteurs thermiques afin que le bruit de la poulie 100 ne soit plus distinguable du bruit du moteur thermique.

A cet effet, et en référence à la figure 3, la disposition des renforts 7 de poulie 100 est obtenue en appliquant un décalage angulaire par rapport à la position théorique de chacun des renforts 7. Le décalage est défini individuellement pour chaque renfort 7, de la manière qui va être présentée ci-après.

Une méthode de brouillage de séquence, couramment connue sous le nom de méthode Scrambler (dénomination employée ci-après), est mise en œuvre pour déterminer le décalage angulaire de chaque renfort 7. Cette méthode de Scrambler permet d'éliminer la dépendance du spectre de puissance acoustique au signal réel de départ, dans notre cas le bruit de sirène des renforts 7 de poulie 100, en le rendant plus dispersé de manière à étaler au maximum l'énergie acoustique sur une plus large bande de fréquences et donc à réduire le niveau énergétique des émergences de sirène des renforts 7 de poulie 100.

Il existe deux types de méthode de Scrambler :
- une méthode multiplicative, exécutant une multiplication d'un signal d'entrée par une fonction de transfert de Scrambler, pour donner des systèmes linéaires discrets ;
- une méthode additive, par l'addition (via un « OU » exclusif) de modules deux à deux, transformant une séquence de données en une séquence de données pseudo-aléatoires, via l'application d'une séquence binaire pseudo-aléatoire connue sous le nom de PRBS, acronyme anglais de « Pseudo-random binary sequence ».

La méthode de Scrambler additive a ici été identifiée comme présentant les meilleurs résultats pour approcher la coloration en bruit d'un moteur thermique automobile. Cette méthode a donc été retenue pour déterminer le décalage angulaire propre à chaque renfort 7 de poulie 100.

Le terme « pseudo-aléatoire » signifie, ici, que chaque bit de la séquence binaire est indépendant des autres, mais que cette séquence est périodique, donc déterministe. Par exemple, pour la séquence binaire pseudo-aléatoire PRBS 2³, la séquence périodique est obtenue à partir du huitième (=2³) bit. Cette séquence est rappelée ci-dessous à des fins de compréhension, et peut comporter davantage de bits.
sur une suite de deux bits : 1 ; 0 ;
sur une suite de quatre bits : 1 ; 0 ; 0 ; 1 ;
sur une suite de six bits : 1 ; 0 ; 0 ; 1 ; 0 ; 1 ;
sur une suite de sept bits: 1 ; 0 ; 0 ; 1 ; 0 ; 1 ; 1 ;
sur une suite de huit bits: 1 ; 0 ; 0 ; 1 ; 0 ; 1 ; 1 ; 1 ;
sur une suite de douze bits: 1 ; 0 ; 0 ; 1 ; 0 ; 1 ; 1 ; 1 ; 0 ; 0 ; 1 ; 0.

On remarque alors que cette séquence PRBS 2³ présente la séquence périodique suivante : 1001011. La longueur de la séquence périodique est proportionnellement efficace par rapport aux nombres de bits qu'elle présente : une séquence PRBS 2³ présentant une séquence périodique à compter de la huitième valeur sera idéale pour une poulie 100 comportant 2³=8 renforts au maximum, alors qu'une poulie 100 à 2⁴=16 renforts au maximum nécessitera plutôt une séquence PRBS 2⁴ où la séquence périodique est obtenue à compter du seizième bit. Ainsi, dans le cas de la poulie 100 à douze renforts 7, la séquence PRBS 2⁴ sera la mieux adaptée.

En effet, pour une poulie 100 ayant un nombre N de renfort 7 donné, il est, selon l'invention, recommandé de choisir une séquence binaire pseudo-aléatoire ayant une longueur de séquence périodique permettant de minimiser la répétition des motifs sur une séquence dont la longueur est égale au nombre N de renfort 7. Une séquence périodique de longueur trop faible ou trop élevée mènera, par rapport à une séquence de longueur optimale, à la répétition de motifs dans la répartition des renforts 7.

La séquence PBRS 2⁴ a pour séquence périodique : 1 ; 0 ; 0 ; 0 ; 1 ; 0 ; 0 ; 1 ; 1 ; 0 ; 1 ; 0 ; 1 ; 1 ; 1 ; 1. Le décalage angulaire d'un renfort 7 correspond respectivement à un unique bit de la séquence PRBS 2⁴. Ainsi, selon le nombre N de renforts 7 de poulie 100 à considérer, ici douze, on sélectionne les douze premiers bits de la séquence, à savoir : 1 ; 0 ; 0 ; 0 ; 1 ; 0 ; 0 ; 1 ; 1 ; 0 ; 1 ; 0. Le décalage angulaire de chaque renfort 7 dépend alors de cette séquence pseudo-aléatoire de bits. Plus précisément, chaque bit de cette séquence correspond respectivement à une valeur d'angle α ou β correspondant à un décalage angulaire d'un renfort 7 par rapport à la position théorique des renforts 7 (cf. figure 3).

Par exemple, chaque bit « 1 » est associé à une valeur α de décalage angulaire dans un premier sens, par exemple le sens R de rotation de la poulie 100; et chaque bit « 0 » est associé à une valeur β de décalage angulaire, dans un deuxième sens opposé au premier sens, par exemple un sens opposé au sens R de rotation de la poulie 100. En variante, les décalages angulaires α, β peuvent être dans le même sens de rotation sous réserve de définir les décalages angulaires α, β de valeurs différentes.

Ainsi, dans l'exemple de la figure 3, en partant d'une position D de départ, et par lecture dans le sens horaire, on constate bien que les décalages angulaires des renforts 7, symbolisés par des flèches courbes, suivent la séquence binaire à douze valeurs 1 ; 0 ; 0 ; 0 ; 1 ; 0 ; 0 ; 1 ; 1 ; 0 ; 1 ; 0 de la séquence binaire pseudo-aléatoire PRBS 2⁴.

Pour attribuer les valeurs α et β de décalage angulaire à la séquence PRBS 2⁴, il est nécessaire de déterminer l'écart maximal autorisé par le balourd. Ce balourd peut, par exemple, être déterminé théoriquement, ou expérimentalement, en fonction des différentes possibilités de combinaisons de décalages angulaires des renforts 7. Dans un souci de durabilité et de tenue de la poulie 100, l'écart entre les deux valeurs de décalage α et β doit être supérieur à un minimum, qui pour une poulie 100 à douze renforts 7, est indiqué être d'au moins six degrés.

Plus l'écart autorisé est important, plus la répartition radiale des renforts 7 selon la séquence PRBS est efficace sur l'atténuation du bruit de sirène. Ainsi, on attribue aux bits « 1 », « 0 » de la séquence PRBS 2⁴ une valeur α ou β de décalage angulaire à appliquer aux renforts 7, ces valeurs α, β étant choisies en fonction de l'écart autorisé par le balourd.

A titre d'exemple, pour la poulie 100 à douze renforts 7 de la figure 3, il est possible de choisir un écart entre les deux valeurs de décalage α, β de six degrés, en remplaçant par exemple les bits «0» et «1» de la séquence PRBS 2⁴ par les valeurs de décalages angulaires «α =-3° et β=3°», «α =-4° et β=2°», «α=0° et β=6°» ou encore «α =-2° et β=4°». Ainsi, en utilisant l'écart de six degrés ente les valeurs de décalage α et β ayant pour valeur α=+3° et β=-3° que l'on applique à la séquence à douze renforts 7 (1 ; 0 ; 0 ; 0 ; 1 ; 0 ; 0 ; 1 ; 1 ; 0 ; 1 ; 0) : on obtient les décalages suivant par rapport à la position théorique: +3°, -3°, -3°, -3°, +3°, -3°, -3°, +3°, -3°, +3°, -3°, comme cela est illustré par la figure 3.

Alternativement, on pourra choisir un écart entre les deux valeurs de décalage α, β de sept degrés, en remplaçant par exemple les bits «0» et «1» de la séquence PRBS 2⁴ par les valeurs de décalages angulaires «α=-3,5° et β=+3,5°», ou «α=-3° et β=+4°», ou encore «α=-4° et β=+3°».

D'autres combinaisons sont possibles pour respecter l'écart entre les deux valeurs de décalage α, β. Cet écart pourra être adapté en fonction de l'application et en particulier du balourd de la poulie AVT 100.

L'invention s'applique à toute poulie 100 quel que soit le nombre N de renforts 7. En effet, pour des poulies à moins de huit renforts 7, les valeurs α et β sont appliquées à la séquence PRBS 2³ dont la séquence périodique est la suivante : 1 ; 0 ; 0 ; 1 ; 0 ; 1 ; 1 ; 0. Pour des poulies comprenant entre neuf et seize renforts 7, les valeurs α et β sont appliquées à la séquence PRBS 2⁴ dont la séquence périodique est la suivante : 1 ; 0 ; 0 ; 0 ; 1 ; 0 ; 0 ; 1 ; 1 ; 0 ; 1 ; 0 ; 1 ; 1 ; 1 ; 1. Pour les poulies 100 comprenant entre dix-sept et trente-deux renforts 7, les valeurs α et β sont appliquées à la séquence PRBS 2⁵ dont la séquence périodique est la suivante :1 ; 0 ; 0 ; 0 ; 0 ; 1 ; 0 ; 0 ; 0 ; 1 ; 1 ; 0 ; 0 ; 1 ; 0 ; 1 ; 0 ; 1 ; 1 ; 1 ; 1 ; 1 ; 0 ; 0 ; 0 ; 0 ; 1 ; 0 ; 0 ; 0 ; 1; 1. Et ainsi de suite.

L'utilisation de telles séquences binaires pseudo-aléatoires PRBS pour les décalages angulaires α et β des renforts 7 successifs permet de réduire le bruit acoustique des sirènes aérauliques de la poulie 100 et, par conséquent, de modifier la coloration du bruit en bruit de moteur. Notamment, l'invention permet de diminuer fortement l'intensité de l'émission acoustique correspondant à l'harmonique engendrée par la répétition des renforts 7 quand ceux-ci sont répartis de manière régulière autour de l'axe C. En outre, la présente invention permet aux constructeurs automobiles, d'alléger les contraintes de critères acoustiques des poulies AVT 100, permettant donc aux fournisseurs de ce type de poulie 100 d'optimiser leurs performances, ainsi que les coûts de réalisation associés.

## Revendications

1. Poulie (100) de type amortisseur de vibrations de torsion comprenant :
- un corps (5) de forme sensiblement annulaire, et
- des renforts (7) répartis autour d'un axe (C) dudit corps (5) de la poulie (100), chaque renfort (7) présentant un décalage angulaire (α, β) par rapport à une position théorique pour laquelle ce renfort (7) présenterait avec l'ensemble des autres renforts (7) de la poulie (100), une répartition angulaire régulière par rapport à l'axe (C) de la poulie (100), **caractérisée en ce que** le décalage angulaire (α, β) suivant une séquence binaire pseudo-aléatoire (PRBS), un bit « 1 » ou « 0 » correspondant respectivement à un premier décalage angulaire (α) et à un deuxième décalage angulaire (β), et **en ce que** la séquence binaire pseudo-aléatoire (PRBS) est calculée via une méthode additive de brouillage dite de Scrambler.

2. Poulie selon la revendication 1, **caractérisée en ce que**, ledit premier décalage angulaire (α) est réalisé suivant un premier sens de rotation et ledit deuxième décalage angulaire (β) est réalisé suivant un deuxième sens de rotation opposé au premier sens de rotation.

3. Poulie selon l'une des revendications 1 ou 2, **caractérisée en ce que** la séquence binaire pseudo-aléatoire (PRBS) comprend le même nombre de bits qu'un nombre (N) total de renforts (7).

4. Poulie selon l'une quelconque des revendications 1 à 3, **caractérisée en ce que** des valeurs du premier (α) et du deuxième (β) décalages angulaires sont déterminées en fonction d'un balourd de poulie (100) induit par lesdits renforts (7).

5. Poulie selon l'une quelconque des revendications 1 à 4, **caractérisée en ce qu'**un écart entre des valeurs du premier (α) et du deuxième (β) décalages angulaires est égal à au moins six degrés.

6. Poulie selon l'une quelconque des revendications 1 à 5, **caractérisée en ce qu'**elle comporte entre neuf et seize renforts (7), et **en ce que** la séquence binaire pseudo-aléatoire (PRBS) utilisée possède une séquence périodique à partir d'un seizième bit.

7. Poulie selon la revendication 6, **caractérisée en ce que** les renforts (7) sont au nombre (N) de douze et **en ce que** la séquence binaire pseudo-aléatoire (PRBS) correspond à : 1;0;0;0;1;0;0;1;1;0;1;0.

8. Moteur thermique de véhicule automobile **caractérisé en ce qu'**il comprend une poulie (100) de type amortisseur de vibrations de torsion telle que définie selon l'une quelconque des revendications précédentes.

## Patentansprüche

1. Riemenscheibe (100) mit Torsionsschwingungsdämpfer, die Folgendes umfasst:
- einen Körper (5) mit im Wesentlichen ringförmiger Form, und
- Verstärkungen (7), die um eine Achse (C) des Körpers (5) der Scheibe (100) verteilt sind,
wobei jede Verstärkung (7) einen Winkelversatz (α, β) in Bezug auf eine theoretische Position aufweist, für die diese Verstärkung (7) mit allen anderen Verstärkungen (7) der Scheibe (100) eine regelmäßige Winkelverteilung in Bezug auf die Achse (C) der Scheibe (100) darstellen würde, **dadurch gekennzeichnet, dass** der Winkelversatz (α, β) einer binären Pseudo-Zufallssequenz (PRBS) folgt, wobei ein Bit "1" oder "0" jeweils einem ersten Winkelversatz (α) und einem zweiten Winkelversatz (β) entspricht, und dass die binäre Pseudo-Zufallssequenz (PRBS) über ein additives Störverfahren, Scrambler-Verfahren genannt, berechnet wird.

2. Scheibe nach Anspruch 1, **dadurch gekennzeichnet, dass** der erste Winkelversatz (α) gemäß einer ersten Drehrichtung ausgeführt wird, und der zweite Winkelversatz (β) gemäß einer zweiten Drehrichtung, die der ersten Drehrichtung entgegengesetzt ist, ausgeführt wird.

3. Scheibe nach einem der Ansprüche 1 oder 2, **dadurch gekennzeichnet, dass** die binäre Pseudo-Zufallssequenz (PRBS) dieselbe Anzahl von Bits umfasst wie eine Gesamtanzahl (N) von Verstärkungen (7).

4. Scheibe nach einem der Ansprüche 1 bis 3, **dadurch gekennzeichnet, dass** Werte des ersten (α) und des zweiten (β) Winkelversatzes in Abhängigkeit von einer Scheibenunwucht (100), die von den Verstärkungen (7) induziert wird, bestimmt werden.

5. Scheibe nach einem der Ansprüche 1 bis 4, **dadurch gekennzeichnet, dass** ein Unterschied zwischen dem Wert des ersten (α) und des zweiten (β) Winkelversatzes gleich mindestens sechs Grad ist.

6. Scheibe nach einem der Ansprüche 1 bis 5, **dadurch gekennzeichnet, dass** sie zwischen neun und sechzehn Verstärkungen (7) umfasst, und dass die verwendete binäre Pseudo-Zufallssequenz (PRBS) eine periodische Sequenz ab dem sechzehnten Bit besitzt.

7. Scheibe nach Anspruch 6, **dadurch gekennzeichnet, dass** die Anzahl (N) der Verstärkungen (7) zwölf beträgt, und dass die binäre Pseudo-Zufallssequenz (PRBS) 1;0;0;1;0;0;1;1;0;1;0 entspricht.

8. Kraftfahrzeug-Brennkraftmaschine, **dadurch gekennzeichnet, dass** sie eine Riemenscheibe mit Torsionsschwingungsdämpfer (100) umfasst, die nach einem der vorstehenden Ansprüche definiert ist.

## Claims

1. A torsional vibration damper-type pulley (100) including:
- a substantially annular body (5), and
- reinforcements (7) distributed about an axis (C) of said body (5) of the pulley (100),
each reinforcement (7) having an angular offset (α, β) relative to a theoretical position for which this reinforcement (7) would present, with all the other reinforcements (7) of the pulley (100), a uniform angular distribution relative to the axis (C) of the pulley (100), **characterized in that** the angular offset (α, β) following a pseudorandom binary sequence (PRBS), a bit "1" or "0" corresponding respectively to a first angular offset (α) and to a second angular offset (β), and **in that** the pseudorandom binary sequence (PRBS) is calculated via an additive method of interference designated as Scrambler.

2. The pulley according to Claim 1, **characterized in that** said first angular offset (α) is realized along a first rotation direction and said second angular offset (β) is realized along a second rotation direction opposed to the first rotation direction.

3. The pulley according to one of Claims 1 or 2, **characterized in that** the pseudorandom binary sequence (PRBS) includes the same number of bits as a total number (N) of reinforcements (7).

4. The pulley according to any one of Claims 1 to 3, **characterized in that** values of the first (α) and second (β) angular offsets are determined as a function of a pulley imbalance (100) induced by said reinforcements (7).

5. The pulley according to any one of Claims 1 to 4, **characterized in that** a difference between values of the first (α) and second (β) angular offsets is equal to at least six degrees.

6. The pulley according to any one of Claims 1 to 5, **characterized in that** it comprises between nine and sixteen reinforcements (7), and **in that** the pseudorandom binary sequence (PRBS) which is used has a periodic sequence starting from a sixteenth bit.

7. The pulley according to Claim 6, **characterized in that** the reinforcements (7) are twelve in number (N) and **in that** the pseudorandom binary sequence (PRBS) corresponds to: 1;0;0;0;1;0;0;1;1;0;1;0.

8. A heat engine of a motor vehicle, **characterized in that** it includes a torsional vibration damper-type pulley (100) as defined according to any one of the preceding claims.
